# EUROPEAN PATENT APPLICATION

(11) **EP 0 757 147 A2**
(43) Date of publication of application: **05.02.1997**
(21) Application number: 96305687.4
(22) Date of filing: 01.08.1996
(51) Int. Cl.: E05B 65/19

(54) **Security apparatus**

(30) Priority: 01.08.1995 ZA 9506407
(71) Applicant: Magrobi, Brian, Johannesburg (ZA); Keech, Anthony John, New Redruth, Alberton (ZA)
(72) Inventor: Magrobi, Brian, Johannesburg (ZA)
(74) Representative: Allam, Peter Clerk

(57) **Abstract**

A vehicle security apparatus for use with a cable operated mechanism comprises a frame in which a latch member is movable in a guideway. The latch member is connected to the core of a Bowden cable which operates the bonnet release catch of the vehicle. A solenoid controlled plunger is operable selectively to lock the latch member. In this condition, the cable cannot be operated, so that an unauthorised person cannot easily gain access to the vehicle engine compartment. When the solenoid is actuated, normally when a vehicle alarm/immobiliser system is disarmed legitimately, the plunger retracts, freeing the latch member and allowing normal operation of the bonnet catch.

## Description

### BACKGROUND OF THE INVENTION

THIS invention relates to security apparatus for use with a cable operated mechanism.

In most motor vehicles, the engine compartment cover or bonnet is controlled by a catch which can be released by means of a cable operated mechanism. Usually, there is a bonnet release handle in the passenger compartment, which must be pulled to actuate the release mechanism.

It is an object of the invention to provide security apparatus which can be used in conjunction with such a mechanism.

### SUMMARY OF THE INVENTION

According to the invention security apparatus for use with a cable operated mechanism comprises a frame defining a guideway; a latch member securable to the cable and movable in the guideway; and locking means supported by the frame and operable selectively to engage the latch member, to prevent movement thereof in the guideway and thereby to lock or disable the mechanism.

The latch member may be a cylindrical body movable in a bore defined in the frame.

The locking means preferably comprises a plunger movable transversely relative to the direction of travel of the latch member in the guideway, the plunger being engagable with a formation on the latch member.

In a preferred embodiment, the plunger is controlled by a solenoid.

The formation on the latch member may be a recess which receives the plunger.

The apparatus may be adapted for use with a mechanism operated by a Bowden cable, the frame having first and second spaced apart anchor points thereon to which adjacent separated ends of the sheath of the cable can be secured with the central portion or core of the cable secured to the latch member.

The apparatus may include mounting means for mounting the frame adjacent the path of a cable used in conjunction with the apparatus.

The invention extends to a security installation comprising security apparatus as defined above mounted in a compartment of a vehicle and connected between respective ends of a cable arranged to operate a catch controlling access to the compartment.

The security apparatus is preferably mounted in the engine compartment of a motor vehicle and connected between respective ends of a cable controlling a bonnet release catch of the engine compartment.

### BRIEF DESCRIPTION OF THE DRAWINGS

- **Figure 1**: is a pictorial view of security apparatus according to the invention;
- **Figure 2**: is a sectional side view on the line 2-2 in Figure 1;
- **Figure 3**: is a pictorial view of the internal components of the apparatus; and
- **Figure 4**: is a schematic illustration, showing how the apparatus is installed in a motor vehicle.

### DESCRIPTION OF AN EMBODIMENT

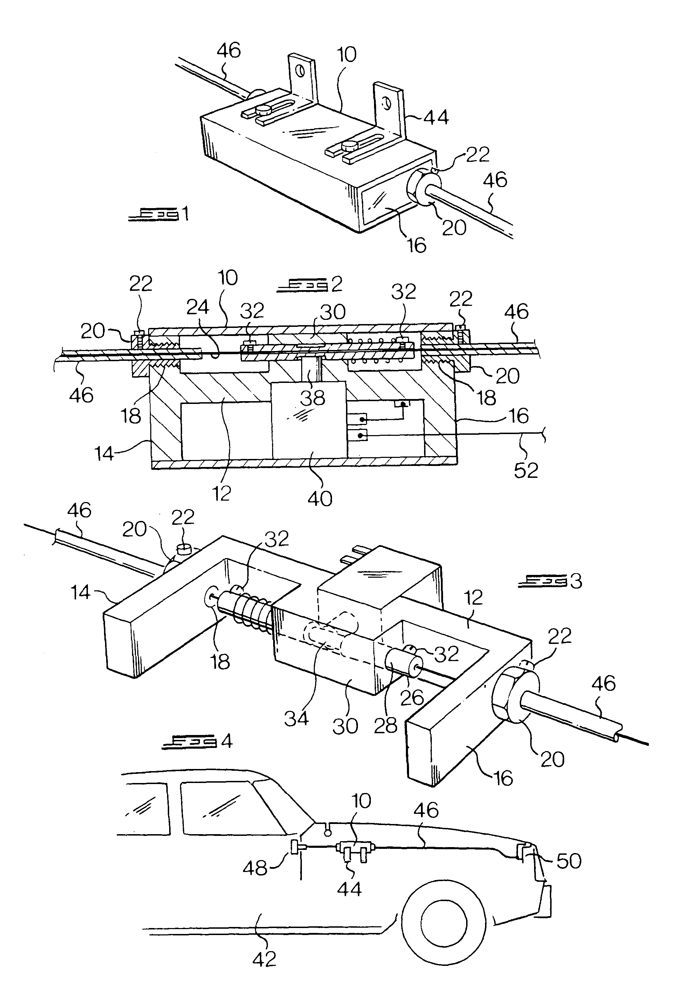

The illustrated security apparatus comprises a sturdy metallic housing 10 which is formed from a length of extruded aluminium box section. Within the housing 10 is an elongate frame 12 (see Figures 2 and 3) which has end plates 14 and 16 which close the ends of the housing 10. In each of the end plates 14 and 16 is a threaded aperture 18 into which a threaded bush 20 is screwed. A radial set screw 22 in each bush is arranged to clamp an end of the outer sheath 46 of a Bowden cable which has been split, as best indicated in Figure 2.

The central wire or core 24 of the cable is also split and is clamped at opposite ends of a cylindrical latch member 26 which slides in a bore 28 in a central guide block 30 of the frame 12. Set screws 32 clamp the central wire in position. In one embodiment, the latch member 26 has a bore, with respective ends of the central wire of the cable being inserted into opposite ends of the bore after cutting of the wire. In another embodiment the latch member 26 may have a slot cut in it, allowing it to be placed over the wire without cutting the wire. In the latter case, a single set screw or other fastener may be sufficient to fix the latch member to the wire.

The latch member 26 has a central portion 34 of reduced diameter, effectively defining a recess in the latch member which lies adjacent to the plunger 38 of a solenoid 40 in its rest position. The plunger is arranged to move transversely relative to the axis of movement of the latch member. The plunger 38 of the solenoid may be biased by a spring towards the latch member 26, or the solenoid may be oriented so the plunger tends to be urged towards the latch member 26 by gravity. In either case, the engagement of the plunger 38 with the latch member prevents the latch member from moving longitudinally in its bore, thus effectively locking or disabling the mechanism to which the security apparatus is connected via the Bowden cable. When the solenoid is energised, the plunger 38 retracts and allows free movement of the latch member and thus of the cable.

A typical application for the described security apparatus is in a motor vehicle security device, where it can be used to prevent unauthorised access to the engine compartment of a vehicle. In Figure 4, a vehicle 42 is shown schematically. The housing 10 of the security apparatus is located within the engine compartment, and is mounted on a convenient surface, for example, using L-shaped brackets 44, along the route of the Bowden cable 46 which runs between the bonnet release handle 48 in the passenger compartment of the vehicle and the bonnet release catch 50 at the front of the engine compartment.

The apparatus is installed by cutting the cable 46, and by securing the opposite ends of the cable sheath to the bushes 20 by means of the set screws 22, while the central portion of the cable is connected to the latch member 26, as described above. One terminal of the solenoid 40 is connected to the body of the apparatus, which is in turn connected to the vehicle ground while the other terminal is connected via a conductor 52 to a vehicle alarm or security system, so that the solenoid is energised when the security system is disarmed legitimately.

The vehicle alarm/security system preferably includes an alarm and/or an immobilising device such as a coil cutout relay or a fuel line switch which disables the vehicle when the security system is armed. The immobilising device, together with its control circuit, is located entirely within the engine compartment, under the bonnet, compared with conventional systems where the control circuitry is usually mounted under the vehicle dashboard. In addition, any bypass control for the alarm/immobiliser system is also mounted in the engine compartment.

The described security apparatus makes it almost impossible for a would-be thief to gain access to the engine compartment of the vehicle and to bypass the immobilising device, without seriously damaging the vehicle. Similarly, a would-be thief cannot readily gain access to the alarm system to disable it when it is set off. The amount of time that would be required by the thief to break into the engine compartment to silence the alarm is relatively long, so that he is likely to abandon the attempt. This is a valuable safety feature, as it reduces the necessity for the vehicle owner to intervene when the alarm is set off.

In order to enable access to the vehicle engine compartment in an emergency, an auxiliary connection can be provided to the live contact of the solenoid 40, for example by connecting the conductor 52 to a selected bolt or screw on the body of the vehicle, which is provided with an insulating bush or washer. The connection of an electrical source (typically the live or positive terminal of the vehicle battery) to this contact will then energise the solenoid.

## Claims

1. Security apparatus for use with a cable operated mechanism, characterised in that the security apparatus comprises:
a frame defining a guideway;
a latch member securable to the cable and moveable in the guideway; and
locking means supported by the frame and operable selectively to engage the latch member to prevent movement thereof in the guideway and thereby to lock or disable the mechanism.

2. Security apparatus according to claim 1 characterised in that the latch member is a cylindrical body movable in a bore defined in the frame.

3. Security apparatus according to claim 1 or claim 2 characterised in that the locking means comprises a plunger movable transversely relative to the direction of travel of the latch member in the guideway, the plunger being engagable with a formation on the latch member.

4. Security apparatus according to claim 3 characterised in that the plunger is controlled by a solenoid.

5. Security apparatus according to claim 3 or claim 4 characterised in that the formation on the latch member is a recess which receives the plunger.

6. Security apparatus according to any one of the preceding claims characterised in that the apparatus is adapted for use with a mechanism operated by a Bowden cable, the frame having first and second spaced apart anchor points thereon to which adjacent separated ends of a sheath of the cable can be secured with a core of the cable secured to the latch member.

7. Security apparatus according to any one of claims 1 to 6 characterised in that it includes mounting means for mounting the frame adjacent the path of a cable used in conjunction with the apparatus.

8. A security installation comprising security apparatus according to any one of claims 1 to 7 and characterised in that the security apparatus is mounted in a compartment of a vehicle and connected between respective ends of a cable arranged to operate a latch controlling access to the compartment.

9. A security installation according to claim 8 characterised in that the security apparatus is mounted in the engine compartment of a motor vehicle and connected between respective ends of a cable controlling a bonnet release catch of the engine compartment.
